# FASCICULE DE BREVET EUROPEEN

(11) **EP 0 793 453 B1**
(45) Date de publication et mention de la délivrance du brevet: **10.06.1998**
(21) Numéro de dépôt: 95941120.8
(22) Date de dépôt: 21.11.1995
(51) Int. Cl.: A61C 13/30

(54) **ENSEMBLE DE RECONSTITUTION CORONO-RADICULAIRE EN MATERIAU COMPOSITE A GRADIENT DE MODULE D'ELASTICITE, ET SON PROCEDE DE FABRICATION**
KRONEN-WURZEL WIEDERHERSTELLUNGSEINHEIT AUS VERBUNDMATERIAL MIT ELASTIZITÄTSMODULGRADIENT UND DESSEN HERSTELLUNG
CROWN-AND-ROOT RECONSTRUCTION ASSEMBLY MADE OF A COMPOSITE MATERIAL WITH A MODULUS OF ELASTICITY VARYING ALONG A GRADIENT, AND METHOD FOR MAKING SAME

(30) Priorité: 21.11.1994 FR 9414183
(43) Date de publication de la demande: 10.09.1997
(73) Titulaire: Billet, Gilles, F-38500 Voiron (FR); Clunet-Coste, Bruno, 38500 Tolvon (FR); Duret, Bernard, 38470 Saint-Gervais (FR); Fenon, Christian, 69380 Les Chères (FR); Maneuf, Bernard, 38500 Voiron (FR)
(72) Inventeur: Billet, Gilles, F-38500 Voiron (FR); Clunet-Coste, Bruno, 38500 Tolvon (FR); Duret, Bernard, 38470 Saint-Gervais (FR); Fenon, Christian, 69380 Les Chères (FR); Maneuf, Bernard, 38500 Voiron (FR)
(74) Mandataire: Hecké, Gérard
(86) Numéro de dépôt international: FR9501533
(87) Numéro de publication internationale: WO9615731

(56) Documents cités:
- EP-A- 0 432 001
- CH-A- 562 605
- DE-A- 3 825 601
- FR-A- 2 588 181
- US-A- 4 253 829

## Description

### Etat de la technique

La présente invention concerne un ensemble de reconstitution coronoradiculaire pour une prothèse dentaire, comprenant un tenon d'ancrage physiologique, et une embase de reconstitution coronaire en matériau composite intimement liée au tenon, et s'appliquant sans hiatus sur la dent, ou sur un modèle de laboratoire reproduisant la partie saine résiduelle de la dent.

En dentisterie, les reconstitutions corono-radiculaires font généralement appel à des tenons en alliages métalliques divers, coulés en technique indirecte ou préfabriqués. L'usage de tenons métalliques présente de multiples inconvénients résultant de phénomènes de corrosion électrochimique et d'oxydation, ou d'essaimage dans l'organisme d'ions métalliques. Lorsque l'embase de reconstitution coronaire est coulée en laboratoire simultanément avec le tenon, l'ensemble de la reconstitution corono-radiculaire est homogène, mais possède un comportement mécanique très éloigné de celui de la dent naturelle, conduisant à des fractures radiculaires des dents reconstituées.

Il existe également des tenons en matériau composite notamment en fibres de haute résistance mécanique, éventuellement incluses dans des matrices organiques sous forme de matériaux composites. De tels tenons sont décrits par les documents FR-A 2588181 et EP-A-432001, formant le préambule de la revendication 1. L'embase de la reconstitution est fabriquée directement en bouche sur la dent naturelle, avec une résine chargée ou un verre ionomère. Un tenon constitué en fibre de carbone et en résine époxyde possède un module d'élasticité (110 GPA) identique à celui du titane lorsqu'il est sollicité selon l'axe des fibres. Les tenons peuvent être élaborés par usinage de barres cylindriques, ou être constitués de fibres de carbone axiales assemblées dans une matrice organique.

La méthode consiste à coffrer la dent résiduelle à reconstituer, et à insérer sous forme pâteuse le produit de reconstitution à la spatule ou par manipulation digitale. Le produit de reconstitution est composé de deux pâtes à mélanger au moment de l'emploi, l'une des deux pâtes incluant le catalyseur. Le mélange des deux pâtes risque néanmoins d'incorporer des bulles d'air au sein du mélange, ce qui a pour effet d'inhiber la polymérisation autour de chaque bulle, créant des zones dans lesquelles subsistent des monomères libres, toxiques pour les tissus dentaires. Ces zones mal polymérisées sont à l'origine d'une baisse notable des qualités mécaniques de la reconstitution, et seront le lieu privilégié de discolorations, et de percolations bactériennes, ainsi qu'à l'origine de fissures et fractures. Le double mélange n'autorise pas un contrôle strict des proportions des composants propres à garantir une polymérisation complète.

Il est difficile d'autre part d'utiliser une pâte de reconstitution photo polymérisable dans les conditions bucales, du fait des grandes épaisseurs de produits mis en oeuvre. En effet, le degré de polymérisation d'une résine est inversement proportionnel au carré de la distance à la source lumineuse.

Dans le cas où le matériau de reconstitution est inséré manuellement, la pâte de reconstitution doit posséder des caractéristiques permettant une manipulation aisée. La résine doit être chargée avec des particules ou des fibres ultracourtes, afin de préserver une certaine viscosité et pégosité au matériau, propre à en assurer un maniement manuel aisé. Les caractéristiques mécaniques d'un tel matériau sont basses, le module d'élasticité se situant usuellement au voisinage de 4 à 12 Gpa et la résistance en traction ne dépassant pas 60 à 70 Mpa.

Les inventeurs ont déterminés que dans l'ensemble d'une reconstitution corono radiculaire, la dentine radiculaire, lieu privilégié des fractures, doit être sollicitée le moins possible. Le tenon doit se trouver dans un état passif, et son rôle consiste à maintenir en place la partie coronaire de l'embase de reconstitution. Dans le cas d'un tenon métallique, notamment en titane, ou constitué en fibres de carbone-époxy, l'application d'une pression également répartie sur la face occlusale d'une reconstitution radiculaire provoque une déformation de l'embase de reconstitution coronaire en résine chargée ayant un module d'élasticité faible (4 à 12 Gpa). Le tenon va supporter très rapidement la totalité de la charge, et risque de provoquer l'éclatement de la racine en cas de pression importante sur la dent, notamment lorsque la force est appliquée dans l'axe des fibres qui coincide avec l'axe du tenon et de la dent.

La méthode d'insertion à la spatule ou par manipulation digitale en bouche des résines chargées de particules directement sur le tenon préalablement scellé dans la racine, peut donner naissance à des décollements au niveau de l'interface dentine et de l'embase de reconstitution. Ce hiatus est dû aux inévitables contractions de polymérisation des matrices organiques, et sera le lieu d'infiltrations préjudiciables à la longévité de la reconstitution corono-radiculaire.

### Objet de l'invention

La présente invention vise à remédier à ces inconvénients et consiste à réaliser un ensemble de reconstitution corono radiculaire de grande résistance mécanique, indépendamment de l'angle d'attaque de la force s'exerçant sur la dent.

L'ensemble de reconstitution corono radiculaire selon l'invention est caractérisé en ce que :
- la liaison de l'embase de reconstitution coronaire avec le tenon est réalisée par polymérisation du matériau de ladite embase sous une charge isostatique, et après mise en place d'une pièce de formage accessoire à la partie supérieure de l'embase,
- et la majorité des fibres de renfort du tenon présentent une longueur supérieure à 3mm, et une orientation différente par rapport à l'axe longitudinal du tenon, de manière à ajuster le module d'élasticité du tenon au voisinage de celui de la dentine naturelle, indépendamment de l'angle d'incidence de la force appliquée sur la dent, l'ensemble ayant une résistance à la traction supérieure à 200MPa.

La présence des fibres longues dans le matériau composite de l'ensemble corono-radiculaire permet d'obtenir un module d'élasticité de l'ordre de 15 à 50 GPa.

L'obtention d'un rapport résine/renfort de valeur constante et uniforme résulte d'une pression isostatique sur l'embase de la reconstitution. Il en découle un effet de pressage ayant pour effet de rapprocher les différentes fibres, et d'expulser une certaine quantité de résine, afin d'atteindre le rapport résine/renfort calculé pour obtenir le module d'élasticité recherché, de l'ordre de 15 à 50 Gpa. Pour une même pression de conformage, on conserve le même taux de résine pour chaque reconstitution, et les mêmes caractéristiques mécaniques.

L'identité de module d'élasticité du tenon et de la dentine permet d'obtenir un écoulement harmonieux des contraintes mécaniques, et une absence de concentration de contraintes aux interfaces, notamment à l'extrémité apicale du tenon. Le module d'élasticité de la dentine varie de 9 Gpa pour sa partie radiculaire à 20 Gpa pour sa partie coronaire. L'organisation particulière des fibres longues renforçant le tenon permet d'ajuster le module d'élasticité du tenon à celui de la dentine de la dent, de la partie coronaire du tenon (20 Gpa) à sa partie radiculaire (9 Gpa). Pour éviter l'effet de clou risquant de faire éclater la racine, l'axe de la majorité des fibres du tenon est incliné par rapport à l'axe longitudinal du tenon, lequel coincide avec l'axe d'application des forces masticatoires.

La conséquence est que le tenon radiculaire doit lui aussi posséder un module d'élasticité proche de la dentine corono-radiculaire pour éviter les changements importants de module d'élasticité préjudiciable à l'écoulement harmonieux des contraintes au travers des interfaces.

Selon une caractéristique de l'invention, le tenon possède une organisation des fibres en hélicoïde, entrecroisées ou non, tissées ou non, dont le diamètre des spires et le pas ont été calculés par la méthode des éléments finis. Les fibres longues utilisées peuvent être choisies parmi n'importe quelles fibres hautes performances, notamment fibre de verre E ou R, carbone, céramique, carbure de silicium, carbure de bore, aramide.

Selon une autre caractéristique de l'invention, l'âme centrale du tenon peut être constituée d'un matériau facilement pénétrable mécaniquement ou chimiquement, et servant de guide à un instrument dentaire lors d'une désinsertion du tenon, notamment à l'occasion d'un traitement dentaire ultérieur de la racine.

Le rapport fibre/résine, le diamètre, la longueur et le nombre des fibres de la partie coronaire à la partie apicale du tenon, sont calculés de manière à faire varier le module d'élasticité du tenon de 9 Gpa à 20 Gpa ± 40%, quel que soit l'angle d'incidence de la force qui va solliciter le tenon.

Selon une autre caractéristique de l'invention, on utilise des préformes photo polymérisables, préparées de façon industrielle, c'est à dire dont on maitrise les procédés photo-polymérisables dans des conditions de laboratoire avec des lampes d'éclairage puissantes garantissant un taux de conversion maximun de la résine, ainsi que l'homogénéité recherchée.

### Description des figures

D'autres avantages et caractéristiques ressortiront plus clairement de la description qui va suivre d'un mode de réalisation de l'invention, donné à titre d'exemple non limitatif, et représenté aux dessins annexés, dans lesquels:
- la figure 1 est une vue en coupe d'une partie de la dent équipée d'un appareillage à pression pour réaliser l'ensemble de reconstitution corono-radiculaire selon l'invention;
- la figure 2 montre une vue schématique à échelle agrandie du tenon de la figure 1;
- la figure 3 est une vue identique de la figure 2 d'une variante de réalisation du tenon;
- la figure 4 est une vue identique de la figure 1 d'une variante de réalisation utilisant un appareillage à vide;
- la figure 5 représente une vue en coupe de la dent équipée d'une prothèse dentaire surmontant l'ensemble corono-radiculaire selon l'invention;
- la figure 6 est une vue en coupe d'un autre type de tenon;
- la figure 7 montre un autre système de mise en forme de l'ensemble de reconstitution corono-radiculaire, qui ne fait pas partie de l'invention.

### Description d'un mode de réalisation préférentiel

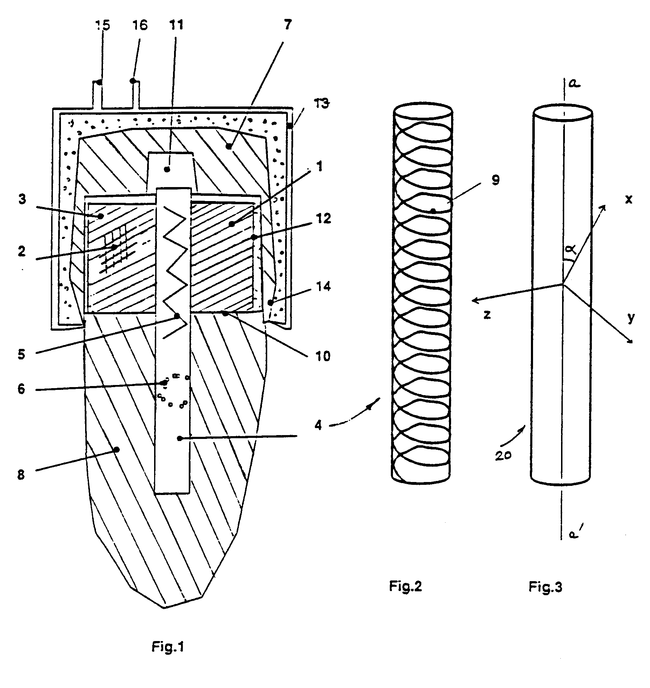

Sur la figure 1, l'ensemble de reconstitution corono -radiculaire comporte une embase de reconstitution coronaire 1 réalisée en un matériau composite comprenant une première armature de fibres 2 noyée dans une première matrice 3, et liée à un tenon radiculaire 4 physiologique. Le tenon 4 est également réalisé en un matériau composite pourvu d'une deuxième armature de fibres 5 noyée dans une deuxième matrice 6. Le tenon 4 est logé axialement dans une orifice central pratiqué dans la racine résiduelle ou dentine 8, et l'embase de reconstitution coronaire 1 prend appui sur la face supérieure de la racine 8.

Selon l'invention, la structure hélicoïdale (figure 2) de la deuxième armature de fibres 5, associée à une variation prédéterminée du diamètre de l'hélicoïde, de son pas, de la nature, du diamètre et du taux de fibres, de leur encroisement et ou de leur tissage a permis de réaliser un tenon 4 en matériau composite, dont le module d'élasticité est toujours comparable à celui de la dentine naturelle, et ne s'en éloigne jamais de plus de 40%, quel que soit l'angle d'incidence de la force sollicitant le tenon 4. Il en résulte une absence de concentration de contraintes mécaniques aux interfaces avec le tenon 4 et la dentine 8, notamment au niveau apical, et par là même une absence d'agression mécanique du tenon 4 vis-à-vis de la dent résiduelle 8. Les fibres 5 de la deuxième armature sont incluses dans la deuxième matrice 6 organique qui peut être choisie parmi n'importe quelle sorte de liant organique, notamment les résines époxy, polyuréthanne, polyester, acrylique ou methacrylique.

La matrice 6 organique du tenon 4 peut être en outre chargée de particules organiques, minérales ou métalliques destinées à en modifier la pégosité, la viscosité, l'état de surface,et la biocompatibilité du tenon 4. L'état de surface de l'extrados du tenon 4 permet un collage optimal du tenon 4 à la dentine 8 selon les techniques de collage connues en soi.

La majorité des libres de renfort 5,2 du tenon 4 et de l'embase de reconstitution 1 ne sont jamais sollicitées en totalité dans leur grand axe. Le module d'élasticité du tenon 4 est toujours proche de celui de la dentine 8, et celui de l'embase de reconstitution 1 est toujours égal ou supérieur à celui de la dentine coronaire, indépendamment de l'angle d'incidence de la force appliquée sur la reconstitution.

La mise en forme de la pâte constitutive de l'embase de reconstitution 1 est opérée par application d'une pression isostatique exercée suite à la déformation d'une membrane ou d'une vessie d'un appareil de formage.

Une pièce de formage intermédiaire 7 accessoire est avantageusement appliquée sur la surface supérieure de la pâte de reconstitution, et peut présenter une forme circulaire ou ellipsoïdale. Le matériau de la pièce intermédiaire 7 est transparent aux rayons lumineux, et peut être déformable. La pièce de formage 7 est pourvue d'un orifice de positionnement 11 borgne, disposé au droit du tenon 4, et peut être solidarisée au contenant de la pâte de reconstitution 1.

La pièce de formage 7 est conformée selon un piston à faible course de coulissement, servant également de butée à l'extrémité supérieure du tenon 4. La pâte de l'embase de reconstitution 1 se présente sous forme d'une préforme cylindrique ou tronconique, se trouvant dans un état pâteux avant-polymérisation ( prepegg). Elle peut être éventuellement incluse dans un étui solidaire de la pièce de formage 7 translucide et déformable. Il est également possible de l'incorporer dans une seringue ou autre contenant opaque permettant la conservation et la dépose de la pâte pour réaliser la reconstitution.

La préforme est positionnée sur le tenon 4 et est ensuite coiffée par la pièce intermédiaire 7. Les moyens de formage sont alors mis en oeuvre ainsi que les moyens de polymérisation. Après polymérisation, la pièce de formage 7 est enlevée, de manière à laisser apparaître la face supérieure de l'embase de reconstitution 1, et l'extrémité saillante du tenon 4.

Dans le cas de la figure 1, le formage de l'ensemble de reconstitution corono-radiculaire peut être effectué dans la bouche du patient. Un carter 13 coiffe l'ensemble de la reconstitution corono - radiculaire, et renferme une vessie gonflable 14 raccordée à un moyen approprié insufflant un fluide 15 à une température et une pression déterminées. L'illumination pour la photopolymérisation est ensuite réalisée au moyen d'un guide de lumière, pouvant être constitué par une fibre optique 16.

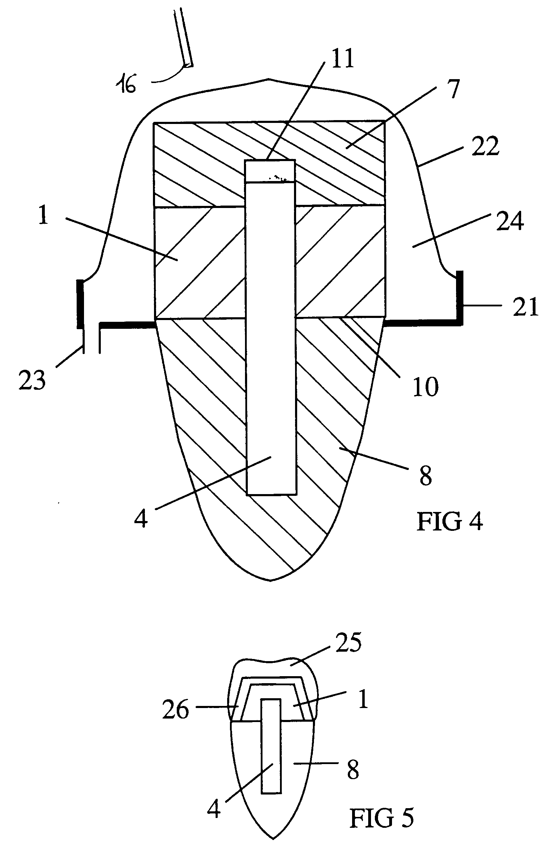

Dans le cas de la variante de la figure 4, le formage extemporané consiste à placer un modèle de laboratoire de la dent résiduelle 8 dans un appareil comportant une enceinte 21 hermétique, et une membrane élastique 22 translucide. Une tubulure 23 d'aspiration permet ensuite de créer une dépression dans l'espace interne 24, pour plaquer la membrane 22 contre la pièce de formage intermédiaire 7, la pâte de reconstitution 1, le tenon 5 et la réplique de la racine résiduelle 8, pendant la phase de polymérisation par les rayons en provenance de la fibre optique 16. La pièce de formage 7 est ensuite jetée en fin de polymérisation.

Cette méthode de formage sous vide peut bien entendu être mise en oeuvre dans la bouche du patient.

Le comportement physique de l'embase de reconstitution 1 peut en outre être amélioré en complétant le formage pendant l'application de la pression isostatique, avec une manipulation digitale au travers de la membrane 22, évitant toute présence de hiatus à l'interface 10 de la racine 8 et de l'embase de reconstitution coronaire 1.

En fin d'opération de photopolymérisation, l'ensemble de reconstitution corono-radiculaire est homogène et possède un module d'élasticité adapté aux besoins de fonctionnement et de protection de la dent, et ne présente pas de hiatus à l'interface reconstitution 10.

En référence à la figure 5, l'embase de reconstitution 1 est coiffée après enlèvement de la pièce de formage 7 accessoire, par une prothèse à haut module d'élasticité, notamment une couronne 25 métallique ou céramique, avec interposition d'une coque de support 26 décrite dans le document WO 95/08300.

La coque 26 sert d'interface et constitue entre la couronne 25 rigide et la dent résiduelle 8, une couche intermédiaire de transition réalisée en matériau composite. Cette coque 26 possède un module d'élasticité proche de celui de la dentine naturelle, et contribue à l'amortissement des chocs.

Le prothésiste colle en laboratoire la coque 26 dans l'intrados de la couronne 25 métallique ou céramique, et ensuite, le dentiste effectue dans son cabinet le collage de la couronne 25, revêtue sur l'embase de reconstitution 1 à l'aide de résine de même nature que celle entrant dans la composition des matériaux composites de l'embase 1 et de la coque 26.

Le tenon 20 selon la figure 3 est obtenu par usinage dans des tôles ou profilés de matériau composite, où l'organisation des fibres est tridimensionnelle suivant les axes x, y, ou z. L'axe d'usinage a, a' du tenon 20 n'emprunte jamais les axes x, y et z, et fait un angle alpha de 20° à 70° par rapport aux axes x, y, z.

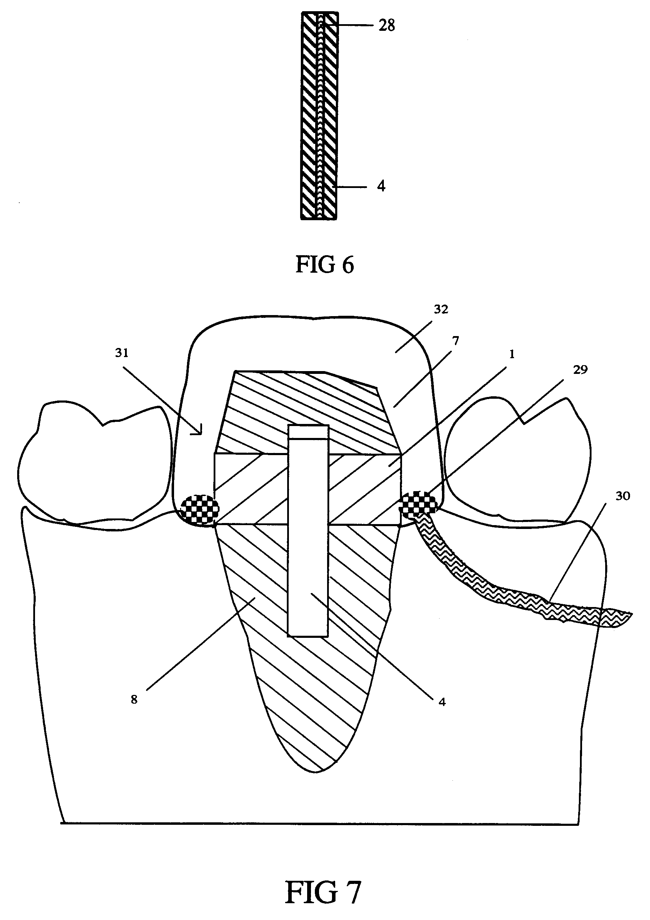

En référence à la figure 6, l'âme centrale du tenon 4 peut être constituée d'un matériau facilement pénétrable mécaniquement ou chimiquement, pour jouer le rôle de guide de pénétration aux instruments dentaires, notamment des forets ou des limes, en évitant les perforations latérales. L'âme 28 peut être transparente, et sert dans ce cas de guide de lumière.

La figure 7 représente un troisième moyen de formage de l'ensemble de reconstitution corono-radiculaire. La partie supérieure de la racine résiduelle 8 est cerclée avec un toron de pompage 29, relié à une pompe à vide par une tubulure de liaison 30. Après mise en place du tenon 4, la pâte de reconstitution 1 est ensuite placée sur la racine résiduelle 8, et la pièce de formage 7 est positionnée sur le dessus de la pâte 1.

Une empreinte 31 d'étanchéité coiffe l'ensemble, et est formée d'un matériau 32 déformable et transparent, notamment à base d'élastomère photopolymérisable. L'empreinte 31 assure l'étanchéité périphérique, et se déforme lors de la mise sous vide pour exercer la pression isostatique lors du formage de l'embase de reconstitution coronaire 1. Une source lumineuse provoque ensuite la photopolymérisation de l'embase de reconstitution 1 à travers la pièce de formage 7, et le matériau 32 de l'empreinte 31, tout en maintenant la pression isostatique.

## Revendications

1. Ensemble de reconstitution corono-radiculaire pour une prothèse dentaire, comprenant une embase de reconstitution coronaire (1) réalisée en un matériau composite ayant une première armature de fibres (2) noyée dans une première matrice (3), et liée à un tenon (4) radiculaire physiologique lui-même réalisé en un matériau composite pourvu d'une deuxième armature de fibres (5) noyée dans une deuxième matrice (6), ladite embase de reconstitution coronaire (1) prenant appui sur la face supérieure de la racine résiduelle (8) après engagement du tenon radiculaire (4) dans un orifice de ladite racine, la majorité des fibres (5) de renfort du tenon (4) présentant une longueur supérieure à 3mm,
caractérisé en ce que:
- la liaison de l'embase de reconstitution coronaire (1) avec le tenon (4) est réalisée par polymérisation du matériau de ladite embase (1) sous une charge isostatique, et après mise en place d'une pièce de formage (7) accessoire à la partie supérieure de l'embase,
- et la majorité des fibres (5) de renfort du tenon (4) possèdent une orientation différente par rapport à l'axe longitudinal du tenon (4), de manière à ajuster le module d'élasticité du tenon (4) au voisinage de celui de la dentine naturelle indépendamment de l'angle d'incidence de la force appliquée sur la dent, l'ensemble ayant une résistance à la traction supérieure à 200MPa.

2. Ensemble de reconstitution corono-radiculaire selon la revendication 1, caractérisé en ce que les fibres (5) de renfort du tenon (4) sont agencées selon une structure hélicoïdale ayant un diamêtre et un pas et/ou taux de fibres prédéterminés le long de la partie coronaire à la partie radiculaire du tenon (4).

3. Ensemble de reconstitution corono-radiculaire selon la revendication 1, caractérisé en ce que la majorité des fibres (5) de renfort du tenon (4) est soumis à un entrecroisement ou à un tissage prédéterminé.

4. Ensemble de reconstitution corono-radiculaire selon la revendication 1, caractérisé en ce que la majorité des fibres (5) de renfort du tenon (4) possède une organisation tridimensionnelle, l'axe d'usinage (aa') du tenon (4) faisant un angle alpha de l'ordre de 20° à 70° avec chacun des trois axes (x,y,z).

5. Ensemble de reconstitution corono-radiculaire selon la revendication 1, caractérisé en ce que les fibres (5,2) de renfort du tenon (4) et de l'embase de reconstitution (1) sont réalisées en des matériaux se comportant comme des guides de lumière.

6. Ensemble de reconstitution corono-radiculaire selon la revendication 1, caractérisé en ce que le matériau composite constitutif de l'embase de reconstitution coronaire (1) comporte, après polymérisation sous la pression isostatique, un rapport volumique de l'ordre de 75% de fibres et charges minérales, et 25% de résine.

7. Ensemble de reconstitution corono-radiculaire selon la revendication 1, caractérisé en ce que la pièce de formage (7) accessoire est constituée en un matériau transparent aux rayons lumineux, et est jetable après la phase de photopolymérisation.

8. Ensemble de reconstitution corono-radiculaire selon la revendication 7, caractérisé en ce que la pièce de formage (7) possède un orifice de positionnement (11) borgne disposé au droit du tenon (4), et agencée selon un piston à faible course de coulissement, servant également de butée à l'extrémité supérieure du tenon (4).

9. Ensemble de reconstitution corono-radiculaire selon la revendication 1, caractérisé en ce qu'une coque de support (26) en matériau composite est collée dans l'intrados d'une couronne (25) constituant la prothèse dentaire, le collage étant réalisé avec une résine de même nature que celle de ladite coque (26) et de la première matrice (3), et que la coque de support (26) forme une couche intermédiaire de transition ayant un module d'élasticité proche de celui de la dentine naturelle pour contribuer à l'amortissement des chocs.

10. Procédé de formage d'un ensemble de reconstitution corono-radiculaire selon l'une des revendications 1 à 9, caractérisé en ce que:
- on utilise comme pâte de l'embase de reconstitution coronaire (1) une préforme se trouvant dans un état pâteux avant-polymérisation, et incluse dans un étui ou une seringue,
- on exerce la pression isostatique par l'intermédiaire d'une membrane (22) élastique et translucide, déformable suite à une mise sous vide de l'espace interne (24), la préforme étant d'une part plaquée sur le tenon (4) et l'interface (10), et d'autre part conformée par une manipulation digitale au travers de la membrane (22),
- et la photo polymérisation est mise en oeuvre par l'illumination d'une source lumineuse, notamment par l'intermédiaire d'une fibre optique (16).

11. Procédé de formage d'un ensemble de reconstitution corono-radiculaire selon l'une des revendications 1 à 9, caractérisé en ce que la pression isostatique pendant la polymérisation est réalisée au moyen d'une enceinte (13) équipée d'une vessie (14) gonflable par des moyens insufflant un fluide (15) à une température et une pression prédéterminées.

## Claims

1. Crown-and-root reconstruction assembly for a dental prosthesis, including a crown reconstruction base (1) made of a composite material with an initial reinforcement of fibers (2) sunk in an initial matrix (3) and connected to a physiological root post (4) also made from a composite material equipped with a second reinforcement of fibers (5) sunk into a second matrix (6), where said crown reconstruction base (1) rests on the upper face of the root (8) after the root post (4) has been inserted into a hole in said root, the majority of the fibers (5) that reinforce the post (4) are more than 3 mm long,
characterized in that :
- the connection between the crown reconstruction base (1) and the post (4) is achieved by polymerization of the material of said base under an isostatic charge, after placing an auxiliary forming part (7) on the upper part of the base,
- and the majority of fibers (5) that reinforce the post (4) have a different direction from that of the longitudinal axis of the post (4), so as to adjust the post's modulus of elasticity close to that of the natural dentine, independently from the angle of incidence of the force applied to the tooth, with an assembly tensile strength greater than 200 MPa.

2. Crown-and-root reconstruction assembly according to claim 1, characterized in that the fibers (5) that reinforce the post (4) are arranged in a helical structure with predetermined diameter and threading and/or rate of fibers along the crown portion to the root portion of the post (4).

3. Crown-and-root reconstruction assembly according to claim 1, characterized in that the fibers (5) that reinforce the post (4) are subject to a predetermined crossing or weaving.

4. Crown-and-root reconstruction assembly according to claim 1, characterized in that the fibers (5) that reinforce the post (4) have a three-dimensional organization, with the tooling axis (aa') of the post (4) at an angle ranging from 20° to 70° in relationship to each of the three axes (x,y,z).

5. Crown-and-root reconstruction assembly according to claim 1, characterized in that the fibers (5,2) that reinforce the post (4) and reconstruction base (1) are made from materials that act as light guides.

6. Crown-and-root reconstruction assembly according to claim 1, characterized in that after polymerization under isostatic pressure, the composite material that constitute the crown reconstruction base (1), comprises a quantitative ratio of approximately 75% fibers and miniral charges and 25% resin.

7. Crown-and-root reconstruction assembly according to claim 1, characterized in that the auxiliary forming part (7) is made out of a material that is transparent to light rays, and that can be disposed of after the photo-polymerization phase.

8. Crovn-and-root reconstruction assembly according to claim 7, characterized in that the auxiliary forming part (7) has a dummy opening positioning hole (11) located straight to the post (4) and placed along a piston with a short sliding stroke that also acts as a stop at the upper end of the post (4).

9. Crown-and-root reconstruction assembly according to claim 1, characterized in that a support shell (26) made out of composite material is glued in the lower side of a crown (25) that is the dental prosthesis, and the gluing process is achieved with a resin of the same nature as that of said shell (26) and the first matrix (3), and that the support shell (26) represents an intermediary transition layer that has a modulus of elasticity close to that of the natural dentine in order to help dampen shocks.

10. Forming process for a crown-and-root reconstruction assembly according to one of the claims 1 to 9, characterized in that:
- a preform is used as the paste for the crown reconstruction base (1) that is in a pasty state prior to polymerization, and that is included in a case or a syringe,
- isostatic pressure is exerted through an elastic and translucent membrane (22) that is distorted when the internal space (24) is placed in a vacuum, the preform being coated, on the one hand, on the post (4) and the interface (10) and on the other hand, is formed via the fingers through the membrane (22),
- and the photo-polymerization is implemented by illumination of a light source, in particular by an optical fiber (16).

11. Forming process for a crown-and-root reconstruction assembly according to one of the claims 1 to 9, characterized in that the isostatic pressure during polymerization is achieved via an enclosure (13) equipped with a bladder (14) that can be inflated by means of injecting a liquid (15) at a predetermined temperature and pressure.

## Patentansprüche

1. Kronen-Wurzel-Wiederherstellungseinheit für eine Zahnprothese bestehend aus einem Sockel für die Kronen-Wiederherstellung (1) aus einem Verbundwerkstoff mit einer in einer ersten Matrix (3) eingelassenen ersten Faserarmierung (2), der mit einem physiologischen Wurzelstift verbunden ist, ebenfalls aus einem Verbundwerkstoff, der über eine zweite Faserarmierung (5) verfügt, die in einer zweiten Matrix (6) eingelassen ist, dabei liegt besagter Sockel zur Wiederherstellung der Krone (1) nach Einführung des Wurzelstifts (4) in eine Öffnung in dieser Wurzel auf dem oberen Teil der Restwurzel (8) auf, wobei die Mehrzahl der verstärkenden Fasern (5) des Stifts (4) eine Länge von über 3 mm aufweist,
dadurch gekennzeichnet:
- die Verbindung zwischen dem Sockel zur Wiederherstellung der Krone (1) und dem Stift (4) wird durch Polymerisation des Werkstoffs dieses Sockels (1) unter isostatischem Druck und nach dem Positionieren eines Formgebungszubehörteils (7) am oberen Teil des Sockels hergestellt,
- und die Mehrzahl der Verstärkungsfasern (5) des Stifts (4) sind im Vergleich zur Längsachse des Stifts (4) unterschiedlich ausgerichtet, so daß der Elastizitätsmodul des Stifts (4) an den des natürlichen Dentins angepaßt werden kann unabhängig vom Anstellwinkel der auf den Zahn ausgeübten Kraft, da die Reißfestigkeit der Einheit bei über 200 MPa liegt.

2. Kronen-Wurzel-Wiederherstellungseinheitgemäß Patenanspruch 1, dadurch gekennzeichnet daß die Fasern (5) zur Verstärkung des Stifts (4) spiralförmig angeordnet sind und einen vorgegebenen Durchmesser bzw. Gang und/oder Dichte von der Stiftkrone (4) bis zur Stiftwurzel aufweisen.

3. Kronen-Wurzel-Wiederherstellungseinheitgemäß Patentanspruch 1, dadurch gekennzeichnet daß der Großteil der Fasern (5) zur Verstärkung des Stifts (4) auf vorgegebene Weise verflochten oder verwoben wurden.

4. Kronen-Wurzel-Wiederherstellungseinheit gemäß Patentanspruch 1, dadurch gekennzeichnet daß die Mehrzahl der Fasern (5) zur Verstärkung des Stifts (4) dreidimensional angeordnet sind, die Bearbeitungsachse (a a') des Stifts (4) beschreibt einen Winkel alpha der Größenordnung 20° bis 70° zu jeder der drei Achsen (x, y, z).

5. Kronen-Wurzel-Wiederherstellungseinheitgemäß Patentanspruch 1, dadurch gekennzeichnet daß die Fasern (5, 2) zur Verstärkung des Stifts (4) und des Sockels für die Wiederherstellung (1) aus Werkstoffen angefertigt werden, die sich wie Lichtleiter verhalten.

6. Kronen-Wurzel-Wiederherstellungseinheitgemäß Patentanspruch 1, dadurch gekennzeichnet daß der Verbundwerkstoff, aus dem der Sockel für die Wiederherstellung der Krone (1) besteht, nach Polymerisation unter isostatischem Druck über ein volumenbezogenes Verhältnis der Größenordnung 75% Fasern und Mineralfüllung und 25% Harz verfügt.

7. Kronen-Wurzel-Wiederherstellungseinheitgemäß Patentanspruch 1, dadurch gekennzeichnet daß das Formgebungszubehörteil (7) aus einem lichtstrahlendurchlässigen Werkstoff besteht und nach der Photopolymerisationsphase weggeworfen wird.

8. Kronen-Wurzel-Wiederherstellungseinheitgemäß Patentanspruch 7, dadurch gekennzeichnet daß das Formgebungszubehörteil (7) über eine blinde Positionieröffnung (11) in Richtung Stift (4) verfügt, und wie ein Kolben mit schwachem Gleithub, der am oberen Ende des Stifts (4) auch als Anschlag dient, angeordnet ist.

9. Kronen-Wurzel-Wiederherstellungseinheitgemäß Patentanspruch 1, dadurch gekennzeichnet daß eine Träger-Kalotte (26) aus einem Verbundwerkstoff in die Wölbung einer die Zahnprothese bildende Krone (25) eingeklebt wird - das Verkleben wird mit einem Harz der gleichen Art, wie das für die Kalotte (26) und die erste Matrix (3) verwendete Harz vorgenommen - und daß die Träger-Kalotte (26) eine Zwischen- und Übergangsschicht bildet , deren Elastizitätsmodul dem des natürlichen Dentins ähnelt, um zur Schockdämpfüng beizutragen.

10. Verfahren zur Formgebung einer Kronen-Wurzel-Wiederherstellungseinheit entsprechend einem der Patentansprüche 1 bis 9, dadurch gekennzeichnet daß :
- als Substanz für den Sockel zur Wiederherstellung der Krone (1) ein Vorformling verwendet wird, der vor Polymerisation in einem pastenähnlichen Zustand ist und sich in einer Hülse oder einer Spritze befindet,
- der isostatische Druck über eine transparente elastische Membrane (22) ausgeübt wird, die durch das Abpumpen des inneren Raums (24) verformbar ist, der Vorformling liegt dabei einerseits fest an dem Stift (4) und der Schnittstelle (10) an und wird andererseits durch digitale Bearbeitung über die Membrane (22) geformt,
- und die Photopolymerisation durch Beleuchtung einer Lichtquelle, überwiegend durch eine Lichtleitfaser (16), erfolgt.

11. Verfahren zur Formgebung einer Kronen-Wurzel-Wiederherstellunseinheit nach einem der Patentansprüche 1 bis 9, dadurch gekennzeichnet daß der isostatische Druck während der Polymerisation durch eine Einfassung (13), die mit einer Blase (14) versehen ist, die durch das Einblasen einer Flüssigkeit (15) bei vorgegebener Temperatur und Druck aufgeblasen wird.
